# EUROPEAN PATENT SPECIFICATION

(11) **EP 3 324 004 B1**
(45) Date of publication and mention of the grant of the patent: **12.02.2020**
(21) Application number: 17202447.3
(22) Date of filing: 17.11.2017
(51) Int. Cl.: F01D 17/16, F01D 5/28

(54) **AIRFOIL WITH RETENTION POCKET HOLDING AIRFOIL PIECE**
SCHAUFELBLATT MIT RÜCKHALTETASCHE ZUR AUFNAHME EINES SCHAUFELBLATTTEILS
PROFIL AÉRODYNAMIQUE AVEC POCHE DE MAINTIEN RETENANT UNE PIÈCE DE PROFIL AÉRODYNAMIQUE

(30) Priority: 17.11.2016 US 201615354147; 17.11.2016 US 201615354259
(43) Date of publication of application: 23.05.2018
(73) Proprietor: United Technologies Corporation, Farmington, CT 06032 (US)
(72) Inventor: PROPHETER-HINCKLEY, Tracy A., Manchester, CT Connecticut 06042 (US)
(74) Representative: Dehns

(56) References cited:
- US-A- 3 215 511
- US-A- 3 619 077
- US-A- 5 827 045

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device, such as an epicyclical gear assembly, may be utilized to drive the fan section such that the fan section may rotate at a speed different than the turbine section. In such engine architectures, a shaft driven by one of the turbine sections provides an input to the epicyclical gear assembly that drives the fan section at a reduced speed.

US,3215,511 discloses a prior art airfoil according to the preamble of claim 1, and a prior art method according to the preamble of claim 12. US5,827,045 discloses a prior art thermally loaded blade for a turbomachine. US3,619,077 discloses a prior art high temperature airfoil.

### SUMMARY

According a first aspect of the present invention, there is provided an airfoil as set forth in claim 1.

In an embodiment of the foregoing, the airfoil section partially defines the retention pocket.

In a further embodiment of any of the foregoing embodiments, the airfoil piece defines a leading end of the airfoil profile.

In a further embodiment of any of the foregoing embodiments, the airfoil piece is formed of ceramic.

In a further embodiment of any of the foregoing embodiments, the airfoil section includes an airfoil wall that defines a trailing end, a pressure side, and a suction side of the airfoil profile, and the airfoil wall is formed of metal.

In a further embodiment of any of the foregoing embodiments, the airfoil piece is non-rigidly secured in the retention pocket.

A further embodiment of any of the foregoing embodiments includes at least one bias member in the retention pocket adjacent the airfoil piece.

A further embodiment of any of the foregoing embodiments includes a cover piece retaining the at least one bias member in compression against the airfoil piece.

In a further embodiment of any of the foregoing embodiments, the retention pocket spans from a first endwall section, through the airfoil section, and into a second endwall section.

In a further embodiment of any of the foregoing embodiments, the airfoil piece is hollow.

In a further embodiment of any of the foregoing embodiments, the airfoil piece defines a leading end of the airfoil profile. The airfoil piece is formed of ceramic and is hollow. The airfoil section includes an airfoil wall that defines a trailing end, a pressure side, and a suction side of the airfoil profile. The airfoil wall is formed of metal, and the airfoil piece is non-rigidly secured in the retention pocket.

According to a further aspect of the present invention, there is provided a gas turbine engine as set forth in claim 11.

According to a further aspect of the present invention, there is provided a method as set forth in claim 12.

An embodiment of the foregoing includes radially sliding the airfoil piece into the retention pocket.

A further embodiment of any of the foregoing embodiments includes using a bias member in the retention pocket adjacent the airfoil piece to non-rigidly secure the airfoil piece in the retention pocket.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an example airfoil in the gas turbine engine.
Figure 3 illustrates an exploded view of an airfoil.
Figure 4 illustrates an exploded view of another example airfoil that has two tension members.
Figure 5 illustrates another example airfoil, which has highly contoured endwall sections.
Figure 6 illustrates an exploded view of the airfoil of Figure 5.

### DETAILED DESCRIPTION

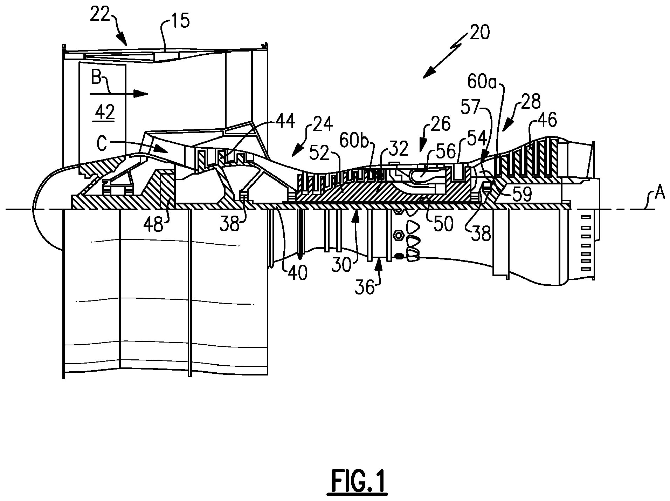

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 may be connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36, if included, is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans and gas turbines with multiple bypass streams.

A significant amount of thrust is provided by the bypass flow B due to the high bypass ratio. The fan section 22 of the engine 20 may be designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s).

In gas turbine engines air is often bled from the compressor for cooling components in the turbine that cannot withstand stoichiometric ideal temperatures of fuel burn; however, compressor bleed penalizes engine efficiency. Efficiency is governed by thermodynamics and mass flow through the turbine. Efficiency can generally be increased by lowering volume of compressor bleed, increasing velocity of compressor bleed, or increasing temperature of compressor bleed. These goals are challenging to meet because compressor bleed relies on the pressure differential between the compressor and the turbine. That is, the goals of lower volume, increased velocity, and increased temperature of compressor bleed are generally opposite to the goals of high pressure and low temperature compressor bleed desired for achieving good pressure differential. In this regard, to facilitate overcoming such challenges, an approach taken in this disclosure is to reduce the need for compressor bleed and cooling by enhancing the temperature resistance capability of the turbine or other components exposed to high temperatures. In particular, thermal resistance can be enhanced at the compressor exit and turbine inlet.

In addition, gas turbine engine operational capability, and the overall efficiency as measured by way of thrust specific fuel consumption (TSFC), may be improved by tailoring the overall pressure ratio of the engine at specific operating conditions via the use of variable area turbine vanes. For example, increasing the flow area of a high pressure turbine variable vane row by rotating some or all of the first stage high pressure turbine vanes to a more open position reduces the engine overall pressure ratio, reducing the high pressure compressor exit temperature, and will permit more fuel to be burned and the aircraft to fly faster. In another example, reducing the flow area of a high pressure turbine variable vane row by rotating some or all of the first stage high pressure turbine vanes to a more closed position increases the engine overall pressure ratio, thus increasing the thermal efficiency of the engine core, allowing the engine to burn less fuel while the aircraft cruises at subsonic speeds.

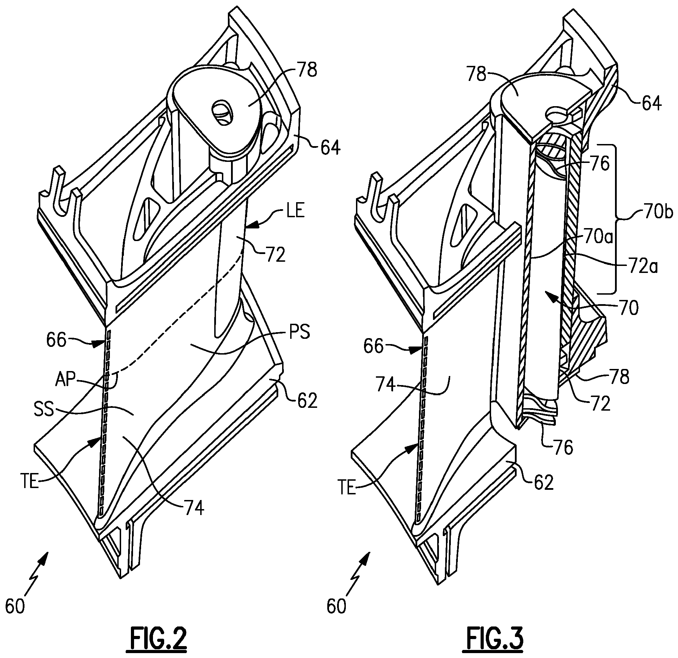

Figure 2 illustrates an example airfoil 60 used in the engine 20. For instance, the airfoil 60 can be a turbine vane, as represented at 60a in Figure 1, or a compressor vane, as represented at 60b in Figure 1. In this example, the airfoil 60 is a static vane, but the airfoil 60 could alternatively be a variable vane that can be pivoted. As will be appreciated, although the examples herein are described in the context of a vane, this disclosure is not limited to vanes, and the examples may also be applicable to blades or other airfoils that are exposed to high temperatures.

The airfoil 60 includes a body which generally includes first and second endwall sections 62/64 and an airfoil section 66 that extends radially between the endwall sections 62/64. The airfoil section 66 defines an airfoil profile, AP, which is the peripheral shape of the airfoil section 66 when viewed in a radial direction. For example, the airfoil profile has a wing-like shape that provides a reaction force via Bernoulli's principle with regard to flow over the airfoil section 66. The airfoil profile (AP) generally includes a leading end (LE), a trailing end (TE), a pressure side (PS), and a suction side (SS). For example, the leading end (LE) is the region of the airfoil profile (AP) that includes a leading edge of the airfoil profile (AP), and the trailing end (TE) is the region of the airfoil profile that includes a trailing edge. The leading edge may be the portion of the airfoil profile (AP) that first contacts air or the foremost edge of the airfoil profile (AP). The trailing edge may be the portion of the airfoil profile (AP) that last contacts air or the aftmost edge of the airfoil profile (AP). For a variable vane, the leading edge may shift, depending on the orientation of the vane.

Referring also to Figure 3, which shows the airfoil 60 with a portion cut away, the airfoil body includes a retention pocket 70 and an airfoil piece 72 disposed in the retention pocket 70. In this example, the airfoil piece 72 is hollow and includes an internal passage 72a, which may be utilized for conveying bleed cooling flow, if used. The retention pocket 70 secures the airfoil piece 72 in place.

The airfoil piece 72 defines a portion of the airfoil profile AP of the airfoil section 66. The remaining portion of the airfoil profile AP is formed by an airfoil wall 74 of the airfoil section 66. In this example, the airfoil piece 72 forms the leading end (LE) of the airfoil profile AP, and the airfoil wall 74 forms the trailing end (TE), the pressure side (PS), and the suction side (SS) of the airfoil profile AP. It is to be understood that although the airfoil piece 72 and airfoil wall 74 are shown and form the complete airfoil profile AP, the airfoil piece 72 could form a different portion of the airfoil profile and/or the airfoil piece 72 and airfoil wall 74 could form less than the complete airfoil profile AP.

The retention pocket 70 includes a sidewall 70a that defines a cavity in which the airfoil piece 72 is disposed. The cavity is generally complimentary in cross-section to the cross-sectional shape of the airfoil piece 72. In this example, the retention pocket 70 spans from the first endwall section 62, through the airfoil section 66, and into the second endwall section 64. At the leading end (LE), the retention pocket 70 defines an open window 70b. The airfoil piece 72 is exposed in the core gas path through the open window 70b.

The airfoil piece 72 is non-rigidly secured in the retention pocket 70. For instance, one or more bias members 76 are disposed in the retention pocket 70 adjacent the airfoil piece 72. In this example, the bias members 76 are wave springs, and two to three wave springs are used at the opposed ends of the airfoil piece 72. One or more cover pieces 78 retain the bias members 76 in compression against the airfoil piece 72. For example, the cover pieces 78 are bonded to the first and/or second endwall sections 62/64, such as by welding or brazing, to keep the bias members 76 in compression. In particular, during engine operation there is thermal growth and contraction of the airfoil piece 72, the first endwall section 62, and the second endwall section 64. Where dissimilar materials are used for these components, such as metal and ceramic, there may be a thermal growth/contraction mismatch. The bias member or members 76 maintain compression force over the range of thermal growths and contractions during engine operation. For instance, the thermal growths and contractions can readily be determined from defined maximum and minimum temperatures during engine operation in order to calculate or estimate a thermal growth/contraction mismatch distance. The bias member or members 76 are configured to provide the compression force over at least that distance.

The materials of which the airfoil 60 is formed of may be selected to enhance the performance. For example, the airfoil piece 72 and airfoil wall 74 may be formed of a ceramic or of a metal. In the example shown, the airfoil piece 72 is ceramic and the airfoil wall 74 is metal. Metal alloys provide a good combination of strength and durability. Example alloys may include, but are not limited to, nickel alloys, cobalt alloys, a nickel alloy coated with cobalt or cobalt alloy, or non-nickel alloys that do not substantially react with ceramic. Ceramic may include, but is not limited to, oxides, carbides, nitrides, borides, silicides, and combinations thereof. A ceramic is a compound of metallic or metalloid elements bonded with nonmetallic elements or metalloid elements primarily in ionic or covalent bonds. In further examples, the ceramic is a monolithic ceramic or a ceramic matrix composite (CMC). For example, a monolithic ceramic is composed of a single, homogenous ceramic material. In comparison, a composite is composed of two or more materials that are individually easily distinguishable. A CMC has a reinforcement phase, such as ceramic or carbon fibers, dispersed in a ceramic matrix formed of oxides, carbides, nitrides, borides, silicides, or combinations thereof.

If enhanced thermal or environmental resistance is desired, the airfoil piece 72 and/or airfoil wall 74 may be coated with a thermal and/or environmental barrier ceramic coating, including but not limited to segmented coatings. As an example, the ceramic may include or may be oxides, carbides, nitrides, borides, silicides, or combinations thereof. In further examples, the ceramic may be or may include yttria stabilized with zirconia, hafnia, and/or gadolinia, gadolinia zirconate, molybdate, alumina, or combinations thereof.

As can be appreciated from this disclosure, the airfoil 60 has relatively few components and is thus easy to assemble. Moreover, different locations of the airfoil profile and can formed of different materials that are tailored to the environmental conditions at the particular locations.

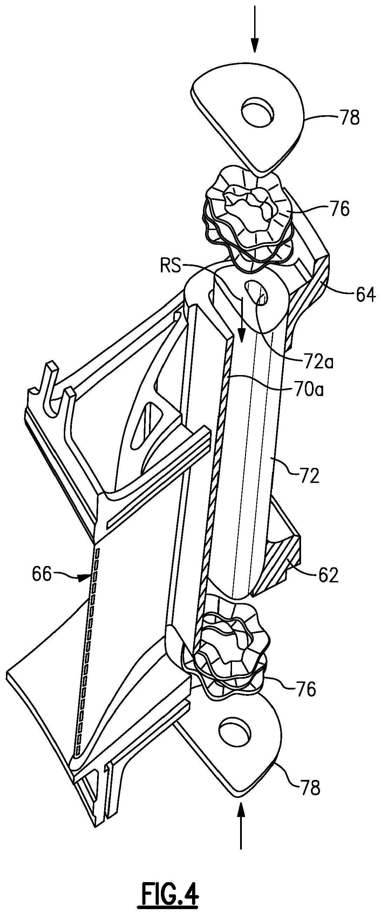

Figure 4 illustrates an exploded view of the airfoil 60 and method of assembling the airfoil 60. The method of assembly may include radially sliding the airfoil piece 72 into the retention pocket 70, as represented at RS. The bias members 76 are positioned near the ends of the airfoil piece 72, and then the cover pieces 78 are secured to the first and second endwall sections 62/64. In this regard, should the airfoil piece 72 require replacement, the airfoil 60 can be disassembled by removing one or more of the cover pieces 78, the airfoil piece 72 can be replaced with a new one, and the airfoil 60 can be reassembled by bonding the cover pieces 78 or new cover pieces. Accordingly, the airfoil piece 72 can be produced individually as a new part for an original airfoil or as a replacement part in an existing airfoil.

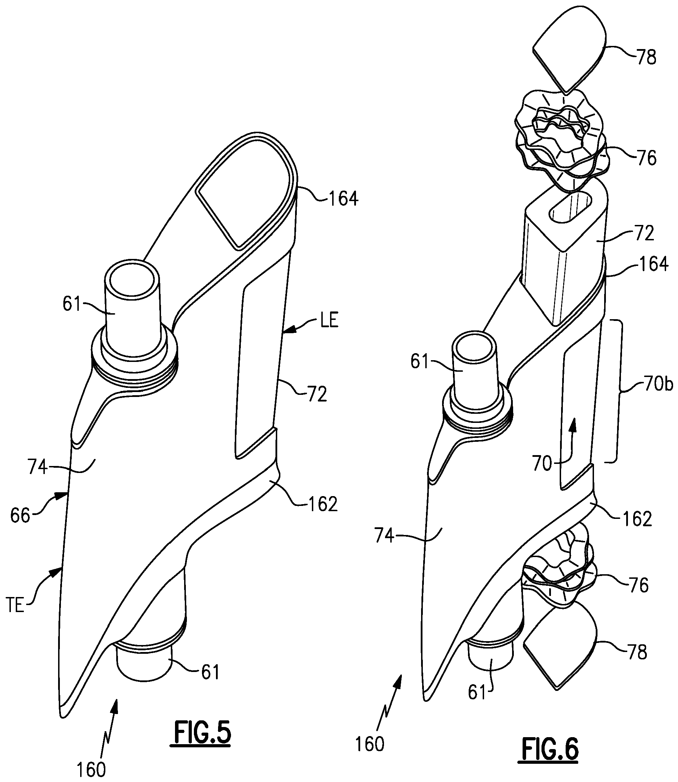

Figures 5 and 6 illustrate another example airfoil 160. In this disclosure, like reference numerals designate like elements where appropriate and reference numerals with the addition of one-hundred or multiples thereof designate modified elements that are understood to incorporate the same features and benefits of the corresponding elements. In this example, the endwall sections 162/164 are highly contoured and represent a variable vane configuration. For example, the endwall sections 162/164 have spindles 61 about which the airfoil 160 can be pivoted.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An airfoil (60) comprising an airfoil body including a retention pocket (70) and an airfoil piece (72) disposed in the retention pocket (70), the retention pocket (70) securing the airfoil piece (72) in place, the airfoil piece (72) defining a portion of an airfoil profile of an airfoil section (66) of the airfoil body,
**characterized in that**:
the retention pocket (70) includes an open window (70b) through which the airfoil piece (72) is exposed.

2. The airfoil (60) as recited in claim 1, wherein the airfoil section (66) partially defines the retention pocket (70).

3. The airfoil (60) as recited in claim 1 or 2, wherein the airfoil piece (72) defines a leading end of the airfoil profile.

4. The airfoil (60) as recited in claim 1, 2 or 3, wherein the airfoil piece (72) is formed of ceramic.

5. The airfoil (60) as recited in any preceding claim, wherein the airfoil section (66) includes an airfoil wall (74) that defines a trailing end (TE), a pressure side (PS), and a suction side (SS) of the airfoil profile, and the airfoil wall (74) is formed of metal.

6. The airfoil (60) as recited in any preceding claim, wherein the airfoil piece (72) is non-rigidly secured in the retention pocket (70).

7. The airfoil (60) as recited in any preceding claim, further comprising at least one bias member (76) in the retention pocket (70) adjacent the airfoil piece (72).

8. The airfoil (60) as recited in claim 7, further comprising a cover piece (78) retaining the at least one bias member (76) in compression against the airfoil piece (72).

9. The airfoil (60) as recited in any preceding claim, wherein the retention pocket (70) spans from a first endwall section (62), through the airfoil section (66), and into a second endwall section (64).

10. The airfoil (60) as recited in any preceding claim, wherein the airfoil piece (72) is hollow.

11. A gas turbine engine (20) comprising:
a compressor section (24);
a combustor (26) in fluid communication with the compressor section (24); and
a turbine section (28) in fluid communication with the combustor (26), at least one of the turbine section (28) or the compressor section (24) including the airfoil (60) of any preceding claim.

12. A method of assembling an airfoil (60), the method comprising using a retention pocket (70) of an airfoil body to secure an airfoil piece (72) in place, wherein the airfoil piece (72) defines a portion of an airfoil profile of an airfoil section (66) of the airfoil body,
**characterized in that**:
the retention pocket (70) includes an open window (70b) through which the airfoil piece (72) is exposed.

13. The method as recited in claim 12, including radially sliding the airfoil piece (72) into the retention pocket (70).

14. The method as recited in claim 12 or 13, including using a bias member (76) in the retention pocket (70) adjacent the airfoil piece (72) to non-rigidly secure the airfoil piece (72) in the retention pocket (70).

## Patentansprüche

1. Schaufelprofil (60), das einen Schaufelprofilkörper umfasst, der eine Rückhaltetasche (70) und ein Schaufelprofilteil (72) umfasst, das in der Rückhaltetasche (70) angeordnet ist, wobei die Rückhaltetasche (70) das Schaufelprofilteil (72) in seiner Position befestigt, wobei das Schaufelprofilteil (72) einen Abschnitt eines Schaufelprofils eines Schaufelprofilabschnitts (66) des Schaufelprofilkörpers definiert,
**dadurch gekennzeichnet, dass**:
die Rückhaltetasche (70) ein offenes Fenster (70b) beinhaltet, durch das das Schaufelprofilteil (72) freigelegt ist.

2. Schaufelprofil (60) nach Anspruch 1, wobei der Schaufelprofilabschnitt (66) teilweise die Rückhaltetasche (70) definiert.

3. Schaufelprofil (60) nach Anspruch 1 oder 2, wobei das Schaufelprofilteil (72) ein vorderes Ende des Schaufelprofils definiert.

4. Schaufelprofil (60) nach Anspruch 1, 2 oder 3, wobei das Schaufelprofilteil (72) aus Keramik geformt ist.

5. Schaufelprofil (60) nach einem der vorhergehenden Ansprüche, wobei der Schaufelprofilabschnitt (66) eine Schaufelprofilwand (74) beinhaltet, die ein hinteres Ende (TE), eine Druckseite (PS) und eine Saugseite (SS) des Schaufelprofils definiert, wobei die Schaufelprofilwand (74) aus Metall geformt ist.

6. Schaufelprofil (60) nach einem der vorhergehenden Ansprüche, wobei das Schaufelprofilteil (72) nicht starr in der Rückhaltetasche (70) befestigt ist.

7. Schaufelprofil (60) nach einem der vorhergehenden Ansprüche, ferner umfassend mindestens ein Vorspannelement (76) in der Rückhaltetasche (70) neben dem Schaufelprofilteil (72) .

8. Schaufelprofil (60) nach Anspruch 7, ferner umfassend ein Abdeckteil (78), das das mindestens eine Vorspannelement (76) in Druck gegen das Schaufelprofilteil (72) hält.

9. Schaufelprofil (60) nach einem der vorhergehenden Ansprüche, wobei die Rückhaltetasche (70) von einem ersten Endwandabschnitt (62) durch den Schaufelprofilabschnitt (66) und in einen zweiten Endwandabschnitt (64) reicht.

10. Schaufelprofil (60) nach einem der vorhergehenden Ansprüche, wobei das Schaufelprofilteil (72) hohl ist.

11. Gasturbinentriebwerk (20), das Folgendes umfasst:
einen Verdichterabschnitt (24);
eine Brennkammer (26) in Fluidkommunikation mit dem Verdichterabschnitt (24); und
einen Turbinenabschnitt (28) in Fluidkommunikation mit der Brennkammer (26), wobei mindestens einer des Turbinenabschnitts (28) oder des Verdichterabschnitts (24) das Schaufelprofil (60) nach einem der vorhergehenden Ansprüche beinhaltet.

12. Verfahren zum Zusammenbauen eines Schaufelprofils (60), wobei das Verfahren die Verwendung einer Rückhaltetasche (70) eines Schaufelprofilkörpers zum Befestigen eines Schaufelprofilteils (72) in seiner Position umfasst, wobei das Schaufelprofilteil (72) einen Abschnitt eines Schaufelprofils eines Schaufelprofilabschnitts (66) des Schaufelprofilkörpers definiert,
**dadurch gekennzeichnet, dass**:
die Rückhaltetasche (70) ein offenes Fenster (70b) beinhaltet, durch das das Schaufelprofilteil (72) freigelegt ist.

13. Verfahren nach Anspruch 12, das das radiale Verschieben des Schaufelprofilstücks (72) in die Rückhaltetasche (70) beinhaltet.

14. Verfahren nach Anspruch 12 oder 13, das das Nutzen eines Vorspannelements (76) in der Rückhaltetasche (70) neben dem Schaufelprofilstück (72) beinhaltet, um das Schaufelprofilteil (72) nicht starr in der Rückhaltetasche (70) zu befestigen.

## Revendications

1. Profil aérodynamique (60) comprenant un corps de profil aérodynamique incluant une poche de maintien (70) et une pièce de profil aérodynamique (72) disposée dans la poche de maintien (70), la poche de maintien (70) arrimant la pièce de profil aérodynamique (72) en place, la pièce de profil aérodynamique (72) définissant une partie d'un contour de profil aérodynamique d'une section de profil aérodynamique (66) du corps de profil aérodynamique,
**caractérisé en ce que** :
la poche de maintien (70) inclut une fenêtre ouverte (70b) à travers laquelle la pièce de profil aérodynamique (72) est exposée.

2. Profil aérodynamique (60) selon la revendication 1, dans lequel la section de profil aérodynamique (66) définit partiellement la poche de maintien (70).

3. Profil aérodynamique (60) selon la revendication 1 ou 2, dans lequel la pièce de profil aérodynamique (72) définit une extrémité d'attaque du contour de profil aérodynamique.

4. Profil aérodynamique (60) selon la revendication 1, 2 ou 3, dans lequel la pièce de profil aérodynamique (72) est formée de céramique.

5. Profil aérodynamique (60) selon une quelconque revendication précédente, dans lequel la section de profil aérodynamique (66) inclut une paroi de profil aérodynamique (74) qui définit une extrémité de fuite (TE), un intrados (PS) et un extrados (SS) du contour de profil aérodynamique et la paroi de profil aérodynamique (74) est formée de métal.

6. Profil aérodynamique (60) selon une quelconque revendication précédente, dans lequel la pièce de profil aérodynamique (72) est arrimée de manière non-rigide dans la poche de maintien (70).

7. Profil aérodynamique (60) selon une quelconque revendication précédente, comprenant en outre au moins un organe de sollicitation (76) dans la poche de maintien (70) adjacent à la pièce de profil aérodynamique (72).

8. Profil aérodynamique (60) selon la revendication 7, comprenant en outre une pièce de recouvrement (78) maintenant l'au moins un organe de sollicitation (76) en compression contre la pièce de profil aérodynamique (72).

9. Profil aérodynamique (60) selon une quelconque revendication précédente, dans lequel la poche de maintien (70) s'étend à partir d'une première section de paroi d'extrémité (62), à travers la section de profil aérodynamique (66), et dans une seconde section de paroi d'extrémité (64).

10. Profil aérodynamique (60) selon une quelconque revendication précédente, dans lequel la pièce de profil aérodynamique (72) est creuse.

11. Moteur à turbine à gaz (20) comprenant :
une section de compresseur (24) ;
une chambre de combustion (26) en communication fluidique avec la section de compresseur (24) ; et
une section de turbine (28) en communication fluidique avec la chambre de combustion (26), au moins l'une parmi la section de turbine (28) ou la section de compresseur (24) incluant le profil aérodynamique (60) selon une quelconque revendication précédente.

12. Procédé d'assemblage d'un profil aérodynamique (60), le procédé comprenant l'utilisation d'une poche de maintien (70) d'un corps de profil aérodynamique pour arrimer une pièce de profil aérodynamique (72) en place, dans lequel la pièce de profil aérodynamique (72) définit une partie d'un contour de profil aérodynamique d'une section de profil aérodynamique (66) du corps de profil aérodynamique,
**caractérisé en ce que** :
la poche de maintien (70) inclut une fenêtre ouverte (70b) à travers laquelle la pièce de profil aérodynamique (72) est exposée.

13. Procédé selon la revendication 12, incluant le coulissement radial de la pièce de profil aérodynamique (72) dans la poche de maintien (70).

14. Procédé selon la revendication 12 ou 13, incluant l'utilisation d'un organe de sollicitation (76) dans la poche de maintien (70) adjacent à la pièce de profil aérodynamique (72) pour arrimer de manière non-rigide la pièce de profil aérodynamique (72) dans la poche de maintien (70).
